# EUROPEAN PATENT APPLICATION

(11) **EP 4 745 112 A1**
(43) Date of publication of application: **20.05.2026**
(21) Application number: 24839422.3
(22) Date of filing: 17.06.2024
(51) Int. Cl.: C04B 35/38, C01G 49/00, H01F 1/34, H01F 1/36

(54) **MNZN-BASED FERRITE, AND METHOD FOR PRODUCING MNZN-BASED FERRITE**

(30) Priority: 10.07.2023 JP 2023112999
(71) Applicant: TOKIN Corporation, Miyagi 989-0223 (JP)
(72) Inventor: MISUMI, Shota, Shiroishi-shi, Miyagi 989-0223 (JP)
(74) Representative: Pfenning, Meinig & Partner mbB
(86) International application number: PCT/JP2024/021849
(87) International publication number: WO 2025/013526

(57) **Abstract**

A MnZn-based ferrite having a good characteristic of the maximum magnetic flux density Bm even in a high-temperature environment is provided. A MnZn-based ferrite according to one aspect of the present invention contains Fe₂O₃, ZnO, and MnO as main components, in which in 100 mol% of the main components, Fe₂O₃ is 56.0 to 59.0 mol%, ZnO is 2.5 to 7.0 mol%, and a balance is MnO, and the MnZn-based ferrite comprises 0.010 to 0.050 mass% of SiO₂, 0.020 to 0.060 mass% of CaO, and 0.150 to 0.350 mass% of Co₂O₃ as sub-components with respect to 100 mass% of the main components.

## Description

### Technical Field

The present invention relates to a MnZn-based ferrite and a method for producing the MnZn-based ferrite.

### Background Art

A MnZn-based ferrite has characteristics such as a high magnetic permeability, a high magnetic flux density, and easy magnetization even in a small magnetic field, and is widely used in a communication device application, a power supply application, and the like. Various studies have been made on a MnZn-based ferrite so as to obtain a characteristic in accordance with the intended application.

Patent Literature 1 discloses a MnZn-based ferrite sintered body including main components consisting of specific amounts of Fe₂O₃, ZnO, and MnO and sub-components consisting of specific amounts of SiO₂, CaCO₃, Co₃O₄, ZrO₂, and Ta₂O₅, having an average crystal grain size of 3 µm or more and less than 8 µm, and having a sintered body density of 4.65 g/cm³ or more, as a MnZn-based ferrite sintered body having a low magnetic core loss in a wide temperature range at a high frequency of 300 to 500 kHz and having a small change in magnetic core loss over time in a high-temperature environment.

Patent Literature 2 discloses, as a MnZn-based ferrite having a low power loss in a wide temperature range and a wide operation magnetic flux density even at a high frequency of 1 MHz or more, a low-loss MnZn-based ferrite including specific amounts of Fe, Mn, and Zn as main components, specific amounts of Co, Ca, and Si as first sub-components, and specific amounts of a Group Va element as a second sub-component and having an average crystal grain size of less than 3.2 µm and a volume resistivity of 1 Ω·m or more.

### Citation List

### Patent Literature

Patent Literature 1: International Patent Publication No. WO 2018/181242
Patent Literature 2: International Patent Publication No. WO 2006/054749

### Summary of Invention

### Technical Problem

In recent years, a MnZn-based ferrite has been used in various environments and, for example, it is increasingly used in a high-temperature environment. Further, in order to improve direct current superposition characteristics in a product using a high-frequency and low-loss ferrite, a ferrite having a good characteristic of the maximum magnetic flux density Bm is required. Therefore, a ferrite having a good characteristic of the maximum magnetic flux density Bm even in a high-temperature environment is required.

In view of the above-described problem, an object of the present invention is to provide a MnZn-based ferrite having a good characteristic of the maximum magnetic flux density Bm even in a high-temperature environment and a method for producing the MnZn-based ferrite.

### Solution to Problem

A MnZn-based ferrite according to one aspect of the present invention contains Fe₂O₃, ZnO, and MnO as main components, in which in 100 mol% of the main components, Fe₂O₃ is 56.0 to 59.0 mol%, ZnO is 2.5 to 7.0 mol%, and a balance is MnO, and the MnZn-based ferrite comprises 0.010 to 0.050 mass% of SiO₂, 0.020 to 0.060 mass% of CaO, and 0.150 to 0.350 mass% of Co₂O₃ as sub-components with respect to 100 mass% of the main components.

The above-described MnZn-based ferrite may further contain 0.010 to 0.100 mass% of ZrO as a sub-component.

In the above-described MnZn-based ferrite, a maximum magnetic flux density Bm at 100°C may be 450 mT or more.

In the above-described MnZn-based ferrite, a sintered density may be 4.9 g/cm³ or more.

In the above-described MnZn-based ferrite, a unit volume magnetic core loss (Pcv) at 100°C, 1 MHz, and 50 mT may be 250 mW/cm³ or less.

In the above-described MnZn-based ferrite, a magnetic permeability µ at 25°C may be 450 or more.

A method for producing a MnZn-based ferrite according to one aspect of the present invention is a method for producing the above-described MnZn-based ferrite, the method including: a process of mixing raw materials comprising respective main components so that, after sintering, in 100 mol% of the main components, Fe₂O₃ is 56.0 to 59.0 mol%, ZnO is 2.5 to 7.0 mol%, and a balance is MnO; a process of adding raw materials comprising respective sub-components so that, after sintering, the MnZn-based ferrite comprises 0.010 to 0.050 mass% of SiO₂, 0.020 to 0.060 mass% of CaO, and 0.150 to 0.350 mass% of Co₂O₃ with respect to 100 mass% of the main components; and a process of disintegrating an obtained mixed powder until the mixed powder becomes a disintegrated powder having a D90 particle size of 1.2 µm or less.

The above-described method may further include a process of molding the disintegrated powder and heat-treating a resulting molded body at 1150 to 1250°C.

### Advantageous Effects of Invention

According to the present invention, it is possible to provide a MnZn-based ferrite having a good characteristic of the maximum magnetic flux density Bm even in a high-temperature environment and a method for producing the MnZn-based ferrite.

### Description of Embodiments

Hereinafter, a MnZn-based ferrite according to the present invention and a method for producing the MnZn-based ferrite will be described. Note that, unless otherwise specified, a numerical range indicated by a symbol "-" includes a lower limit value and an upper limit value thereof.

### [MnZn-based ferrite]

The MnZn-based ferrite (hereinafter also referred to as the present MnZn-based ferrite) according to the present invention contains
Fe₂O₃, ZnO, and MnO as main components, in which
in 100 mol% of the main components, Fe₂O₃ is 56.0 to 59.0 mol%, ZnO is 2.5 to 7.0 mol%, and a balance is MnO, and
the MnZn-based ferrite comprises 0.010 to 0.050 mass% of SiO₂, 0.020 to 0.060 mass% of CaO, and 0.150 to 0.350 mass% of Co₂O₃ as sub-components with respect to 100 mass% of the main components.

The present MnZn-based ferrite contains Fe₂O₃, ZnO, and MnO as main components. In the present MnZn-based ferrite, in 100 mol% of the main components, Fe₂O₃ is 56.0 to 59.0 mol%, ZnO is 2.5 to 7.0 mol%, and a balance (34.0 to 41.5 mol%) is MnO.

By setting the content of Fe₂O₃ to 56.0 mol% or more, preferably 57.0 mol% or more, a MnZn-based ferrite having a high maximum magnetic flux density Bm at 100°C can be obtained. On the other hand, by setting the content of Fe₂O₃ to 59.0 mol% or less, preferably 58.0 mol% or less, a MnZn-based ferrite having a low unit volume magnetic core loss (Pcv) at 100°C, 1 MHz, and 50 mT and a high magnetic permeability µ at 25°C can be obtained.

Further, by setting the content of ZnO to 2.5 mol% or more, preferably 3.5 mol% or more, a MnZn-based ferrite having a low unit volume magnetic core loss (Pcv) at 100°C, 1 MHz, and 50 mT can be obtained. On the other hand, by setting the content of ZnO to 7.0 mol% or less, preferably 5.5 mol% or less, a MnZn-based ferrite having a high maximum magnetic flux density Bm at 100°C can be obtained.

Further, the present MnZn-based ferrite contains at least SiO₂, CaO, and Co₂O₃ as sub-components.

By setting the content of SiO₂ to 0.010 mass% or more, preferably 0.015 mass% or more, more preferably 0.025 mass% or more, and 0.050 mass% or less, preferably 0.045 mass% or less, a MnZn-based ferrite having a low unit volume magnetic core loss (Pcv) at 100°C, 1 MHz, and 50 mT can be obtained.

Further, by setting the content of CaO to 0.020 mass% or more, preferably 0.025 mass% or more, more preferably 0.030 mass% or more, and 0.060 mass% or less, preferably 0.055 mass% or less, more preferably 0.045 mass% or less, a MnZn-based ferrite having a low unit volume magnetic core loss (Pcv) at 100°C, 1 MHz, and 50 mT can be obtained.

Further, by setting the content of Co₂O₃ to 0.150 mol% or more, preferably 0.250 mol% or more, a MnZn-based ferrite having a low unit volume magnetic core loss (Pcv) at 100°C, 1 MHz, and 50 mT can be obtained. On the other hand, by setting the content of Co₂O₃ to 0.350 mol% or less, preferably 0.300 mol% or less, a MnZn-based ferrite having a high magnetic permeability µ at 25°C can be obtained.

The present MnZn-based ferrite may further contain other components as long as the effects of the present invention are achieved. Examples of the other components include other metal oxides to be added as required, and elements inevitably included. Examples of the other metal oxides include ZrO₂, Ta₂O₅, Nb₂O₅, Bi₂O₃, and MoO₃. Among them, ZrO₂ is preferable. Further, examples of the elements inevitably included include C (carbon atom), P (phosphorus atom), and B (boron atom).

In the present MnZn-based ferrite, by setting the content of ZrO₂ to 0.010 mass% or more, preferably 0.030 mass% or more, and 0.100 mass% or less, preferably 0.060 mass% or less, more preferably 0.050 mass% or less, a MnZn-based ferrite having a low unit volume magnetic core loss (Pcv) at 100°C, 1 MHz, and 50 mT can be obtained.

The total content of the other metal oxides excluding ZrO₂ and the elements is preferably 0.1 mass% or less, more preferably 0.01 mass% or less, with respect to 100 mass% of the main components.

In the present MnZn-based ferrite described above, since the content of Fe₂O₃ is increased and the content of ZnO is decreased, the Curie temperature Tc can be improved. As a result, the maximum magnetic flux density Bm at 100°C can be set to 450 mT or more. Therefore, a MnZn-based ferrite having a good characteristic of the maximum magnetic flux density Bm even in a high-temperature environment can be provided.

Further, since the present MnZn-based ferrite has the above composition, a MnZn-based ferrite having a unit volume magnetic core loss (Pcv) of 250 mW/cm³ or less at 100°C, 1 MHz, and 50 mT can be obtained. Furthermore, since the present MnZn-based ferrite has the above composition, a MnZn-based ferrite having a magnetic permeability µ of 450 or more at 25°C can be obtained.

The present MnZn-based ferrite can be particularly suitably used for a power supply circuit for a server etc. used in a high-frequency and high-temperature environment.

### [Method for producing MnZn-based ferrite]

Next, one embodiment of a method for producing a MnZn-based ferrite (hereinafter also referred to as the present production method) will be described.

The present production method may be a production method by which the present MnZn-based ferrite can be suitably produced, the method including at least: a process (a mixing process) of mixing raw materials comprising respective main components so that after sintering, in 100 mol% of the main components, Fe₂O₃ is 56.0 to 59.0 mol%, ZnO is 2.5 to 7.0 mol%, and a balance is MnO; a process (an addition process) of adding raw materials comprising respective sub-components so that the MnZn-based ferrite comprises 0.010 to 0.050 mass% of SiO₂, 0.020 to 0.060 mass% of CaO, and 0.150 to 0.350 mass% of Co₂O₃ with respect to 100 mass% of the main components, after sintering; and a process (a disintegration process) of disintegrating an obtained mixed powder until the mixed powder becomes a disintegrated powder having a D90 particle size of 1.2 µm or less. The present production method may further include processes such as: a drying/granulation process of adding a binder to the mixed powder of the main components after the mixing process to obtain a granule; a calcination process of calcining the obtained granule; a drying/granulation process of drying and granulating the disintegrated powder; a molding process of molding the disintegrated powder or a granule thereof; and a heat treatment process (a sintering process) of heat-treating the molded body.

In the above mixing process, the main components are mixed so that the main components after sintering have the composition of the present MnZn-based ferrite. The form of each of the main components before mixing is not limited to a particular form, and is preferably a powder form since powder is easy to handle and can be mixed uniformly. The raw material powders of the respective main components are mixed, and disintegrated as required, to thereby obtain a mixed powder. The mixing and disintegration methods may be selected as appropriate from known methods. Specific examples thereof include an attritor and a bead mill. The particle size of the mixed powder is not limited to a particular size, and it is preferable to adjust the median diameter D50 to 0.5 µm to 1.5 µm from the viewpoint of uniformity or the like. The particle sizes D50 and D90 described later are a particle size (D50) at which the cumulative frequency of the particle sizes is 50% and a particle size (D90) at which the cumulative frequency of the particle diameters is 90%, respectively, when the particle size distribution of the target particles is measured. Note that the particle size distribution of the mixed powder can be measured by using a particle size distribution measuring apparatus.

The mixed powder of the main components described above may be subjected to the drying/granulation process. In the drying/granulation process, a granule can be obtained, for example, by adding 0.5 to 1 part by mass of a binder such as polyvinyl alcohol when the total mass of the mixed powder is 100 parts by mass to the mixed powder obtained in the mixing process, and spraying the resulting mixture by using a spray dryer or the like. Next, the obtained granule may be calcined, for example, at 750°C for about one hour in an air atmosphere to obtain a calcined product (the calcination process).

Next, sub-components are added to the calcined product so that the sub-components after sintering have the composition of the present MnZn-based ferrite. The form of each of the sub-components before the addition is made is not limited to a particular form, and is preferably a particle form since particles are easy to handle and can be mixed uniformly.

After the addition of the sub-components, the obtained mixed powder is disintegrated to obtain a disintegrated powder. The disintegration may be adjusted as appropriate so that the average crystal grain size of the resulting MnZn-based ferrite is 6 µm or less. Examples of a method therefor include a method of disintegrating the calcined product until the particle size D90 after disintegration becomes 1.2 µm or less.

In the drying/granulation process, a granule is obtained by adding 0.5 to 1.0 part by mass of a binder such as polyvinyl alcohol when the total mass of the disintegrated powder is 100 parts by mass to the disintegrated powder obtained in the disintegration process, and spraying the resulting mixture by using a spray dryer or the like. At this time, the median diameter D50 of the granule is desirably 40 µm or more and 200 µm or less.

In the molding process, the granule obtained in the drying/granulation process is molded into a predetermined shape. The predetermined shape may be designed in accordance with the application or the like. For example, the granule is molded into a toroidal type core having an outer diameter of 15 mm, an inner diameter of 10 mm, and a height of 6 mm.

The granule after molding is heat-treated to obtain a sintered compact (the present MnZn-based ferrite). Regarding the heat treatment (sintering) condition, it is preferable to perform heating at 1150 to 1250°C for several hours. By performing the heat treatment at 1150°C or higher, the sintered density can be 4.9 g/cm³ or higher. Further, a MnZn-based ferrite having a high maximum magnetic flux density Bm at 100°C can be obtained. On the other hand, by performing the heat treatment at 1250°C or lower, a MnZn-based ferrite having a low unit volume magnetic core loss (Pcv) at 100°C, 1 MHz, and 50 mT can be obtained.

According to the present invention described above, it is possible to provide a low-loss MnZn-based ferrite having a good characteristic of the maximum magnetic flux density Bm even in a high-temperature environment, and a method for producing the MnZn-based ferrite.

### Examples

The present invention will be specifically described hereinafter with reference to Examples and Comparative Examples. Note that these descriptions are not intended to limit the present invention.

### [Example 1]

Each raw material powder was weighed and mixed so that after sintering, the content of Fe₂O₃ was 56.00 mol%, the content of ZnO was 5.50 mol%, and the content of MnO was 38.50 mol% to make a total of 100 mol%. An amount of Polyvinyl alcohol equivalent to 0.5 parts by mass with respect to 100 parts by mass in total of the above mixture was added to the above mixture, and the resulting mixture was sprayed by using a spray dryer to obtain a granule. Next, the granule was calcined at 750°C for one hour in an air atmosphere to obtain a calcined product. Next, SiO₂ was added to the calcined product as a sub-component so that the content of SiO₂ after sintering was 0.045 mass% with respect to 100 mass% of the main components. Similarly, Ca(OH)₂ was added so that the content of CaO after sintering was 0.025 mass%, Co₃O₄ was added so that the content of Co₂O₃ after sintering was 0.300 mass%, and ZrO₂ was added so that the content of ZrO₂ after sintering was 0.050 mass%.

Next, as the disintegration process, the mixture of the calcined product and the additives was disintegrated by using a disintegrator so that the particle size D90 after disintegration was 1.2 µm or less, to thereby obtain a disintegrated powder. Next, as the drying/granulation process, when the total mass of the disintegrated powder was 100 parts by mass, 1 part by mass of polyvinyl alcohol was added to the disintegrated powder, and the resulting mixture was sprayed by using a spray dryer to obtain a granule. Next, as the molding process and the sintering process, the granule was molded into a toroidal type core having an outer diameter of 12 mm, an inner diameter of 8 mm, and a height of 5 mm, and sintered at an oxygen partial pressure (PO₂) of 3.3%, and a sintering temperature of 1150°C to obtain a sintered compact (a MnZn-based ferrite).

### [Examples 2 to 11, Comparative Examples 1 to 12]

MnZn-based ferrites according to Examples 2 to 11 and Comparative Examples 1 to 12 were obtained in a manner similar to that in the case of Example 1 except that in Example 1, the raw materials were mixed and added so that the content proportions of the main components and the sub-components after sintering were as shown in Table 1.

### <Evaluation>

Regarding the maximum magnetic flux density Bm of the MnZn-based ferrite at 100°C, a sample was prepared by winding a copper wire around the molded toroidal type core 22 times on the primary side and 22 times on the secondary side, and then the maximum magnetic flux density Bm was measured by using a BH analyzer. Regarding the magnetic permeability µ of the MnZn-based ferrite at 25°C, a sample was prepared by winding a copper wire around the molded toroidal type core five times, and then the magnetic permeability µ was measured by using an impedance analyzer. Regarding the unit volume magnetic core loss (Pcv) of the MnZn-based ferrite at 100°C, 1 MHz, and 50 mT, a sample was prepared by winding a copper wire around the molded toroidal type core five times on the primary side and five times on the secondary side, and then the unit volume magnetic core loss was measured by using a BH analyzer. The sintered density was measured by the Archimedes method. The disintegration particle size D90 was determined by measuring the slurry of the disintegrated powder obtained in the production process in each of the above Examples and Comparative Examples by using a wet particle size distribution measuring apparatus. The average crystal grain size was calculated by image analysis from an image obtained by mirror-polishing the MnZn-based ferrite obtained in each of Examples and Comparative Examples and then dissolving the grain boundary phase by etching followed by observation under a microscope. Note that the measurements were performed on 100 crystal grains each. The results are shown in Table 1.

### [Table 1]

**Table 1**

| Example | Main component (mol%) | | | Additive (wt%) | | | | Bm(mT) @100° C | *µ* @25° C | Pcv(mW/cm³) 1MHz-50mT@100°C | Sintered Density(g /cm³) | Disintegration Particle Size_D90 (nm) | Average Crystal Grain Size (nm) |
|---|---|---|---|---|---|---|---|---|---|---|---|---|---|
| | Fe₂O₃ | MnO | ZnO | SiO₂ | CaO | ZrO₂ | Co₂O₃ | | | | | | |
| Example 1 | 56.00 | 38.50 | 5.50 | 0.045 | 0.025 | 0.050 | 0.300 | 452 | 932 | 206 | 4.93 | 1.02 | 5.3 |
| Example 2 | 57.00 | 39.50 | 3.50 | 0.025 | 0.045 | 0.060 | 0.150 | 460 | 738 | 199 | 4.90 | 1.19 | 5.6 |
| Example 3 | 58.00 | 39.50 | 2.50 | 0.010 | 0.055 | 0.030 | 0.250 | 466 | 573 | 230 | 4.90 | 1.08 | 5.9 |
| Comparative Example 1 | 60.00 | 35.50 | 4.50 | 0.020 | 0.040 | 0.060 | 0.200 | 470 | 400 | 260 | 4.92 | 1.16 | 4.9 |
| Comparative Example 2 | 55.50 | 40.00 | 4.50 | 0.015 | 0.045 | 0.050 | 0.300 | 445 | 1001 | 241 | 4.91 | 1.11 | 5.4 |
| Comparative Example 3 | 56.00 | 36.50 | 7.50 | 0.045 | 0.025 | 0.050 | 0.300 | 448 | 1023 | 212 | 4.91 | 1.17 | 5.0 |
| Example 4 | 56.00 | 37.00 | 7.00 | 0.045 | 0.025 | 0.050 | 0.300 | 450 | 999 | 210 | 4.92 | 1.15 | 5.0 |
| Comparative Example 4 | 56.00 | 42.00 | 2.00 | 0.045 | 0.025 | 0.050 | 0.300 | 455 | 788 | 280 | 4.92 | 1.17 | 5.1 |
| Comparative Example 5 | 58.00 | 39.50 | 2.50 | 0.005 | 0.025 | 0.050 | 0.300 | 463 | 596 | 255 | 4.89 | 1.07 | 6.1 |
| Example 5 | 58.00 | 39.50 | 2.50 | 0.050 | 0.025 | 0.050 | 0.300 | 470 | 540 | 245 | 4.94 | 1.06 | 5.3 |
| Comparative Example 6 | 58.00 | 39.50 | 2.50 | 0.055 | 0.025 | 0.050 | 0.300 | 470 | 535 | 305 | 4.94 | 1.05 | 5.2 |
| Comparative Example 7 | 58.00 | 39.50 | 2.50 | 0.025 | 0.015 | 0.030 | 0.250 | 466 | 585 | 256 | 4.90 | 1.16 | 5.8 |
| Example 6 | 58.00 | 39.50 | 2.50 | 0.025 | 0.020 | 0.030 | 0.250 | 466 | 581 | 243 | 4.91 | 1.15 | 5.6 |
| Example 7 | 58.00 | 39.50 | 2.50 | 0.025 | 0.060 | 0.030 | 0.250 | 465 | 568 | 248 | 4.91 | 1.15 | 5.5 |
| Comparative Example 8 | 58.00 | 39.50 | 2.50 | 0.025 | 0.065 | 0.030 | 0.250 | 467 | 565 | 266 | 4.92 | 1.13 | 5.3 |
| Example 8 | 58.00 | 39.50 | 2.50 | 0.010 | 0.055 | 0.000 | 0.250 | 465 | 570 | 250 | 4.91 | 1.11 | 5.8 |
| Example 9 | 58.00 | 39.50 | 2.50 | 0.010 | 0.055 | 0.010 | 0.250 | 464 | 555 | 240 | 4.91 | 1.12 | 5.6 |
| Example 10 | 58.00 | 39.50 | 2.50 | 0.010 | 0.055 | 0.100 | 0.250 | 465 | 562 | 225 | 4.90 | 1.15 | 5.7 |
| Comparative Example 9 | 58.00 | 39.50 | 2.50 | 0.010 | 0.055 | 0.150 | 0.250 | 466 | 544 | 278 | 4.90 | 1.16 | 5.7 |
| Comparative Example 10 | 59.00 | 36.50 | 4.50 | 0.015 | 0.030 | 0.050 | 0.100 | 468 | 502 | 260 | 4.91 | 1.13 | 5.4 |
| Example 11 | 59.00 | 36.50 | 4.50 | 0.015 | 0.030 | 0.050 | 0.350 | 467 | 451 | 225 | 4.93 | 1.08 | 5.3 |
| Comparative Example 11 | 59.00 | 36.50 | 4.50 | 0.015 | 0.030 | 0.050 | 0.400 | 469 | 435 | 210 | 4.93 | 1.09 | 5.5 |
| Comparative Example 12 | 56.00 | 38.50 | 5.50 | 0.025 | 0.025 | 0.050 | 0.300 | 449 | 901 | 207 | 4.88 | 1.23 | 5.9 |

### [Summary of results]

The MnZn-based ferrite according to Examples 1 to 11 had the maximum magnetic flux density Bm at 100°C of 450 mT or more, the unit volume magnetic core loss (Pcv) at 100°C, 1 MHz, and 50 mT of 250 mW/cm³ or less, the magnetic permeability µ at 25°C of 450 or more, and the sintered density of 4.9 g/cm³ or more, in which in 100 mol% of the main components, Fe₂O₃ is 56.00 to 59.00 mol%, ZnO is 2.50 to 7.00 mol%, and a balance is MnO, and the MnZn-based ferrite contains 0.010 to 0.050 mass% of SiO₂, 0.020 to 0.060 mass% of CaO, 0.150 to 0.350 mass% of Co₂O₃, and 0.000 to 0.100 mass% of ZrO₂ as sub-components with respect to 100 mass% of the main components.

Although the present invention has been described above with reference to the above embodiments, the present invention is not limited only to the configurations of the above-described embodiments. Needless to say, the present invention includes various modifications, changes, and combinations that can be made by a person skilled in the art within the scope of the claimed invention of the present application.

This application is based upon and claims the benefit of priority from Japanese patent application No. 2023-112999, filed on July 10, 2023, the disclosure of which is incorporated herein in its entirety by reference.

## Claims

1. A MnZn-based ferrite comprising Fe₂O₃, ZnO, and MnO as main components, wherein
in 100 mol% of the main components, Fe₂O₃ is 56.0 to 59.0 mol%, ZnO is 2.5 to 7.0 mol%, and a balance is MnO, and
the MnZn-based ferrite comprises 0.010 to 0.050 mass% of SiO₂, 0.020 to 0.060 mass% of CaO, and 0.150 to 0.350 mass% of Co₂O₃ as sub-components with respect to 100 mass% of the main components.

2. The MnZn-based ferrite according to claim 1, further comprising 0.010 to 0.100 mass% of ZrO as a sub-component.

3. The MnZn-based ferrite according to claim 1 or 2, wherein a maximum magnetic flux density Bm at 100°C is 450 mT or more.

4. The MnZn-based ferrite according to claim 1 or 2, wherein a sintered density is 4.9 g/cm³ or more.

5. The MnZn-based ferrite according to claim 1 or 2, wherein a unit volume magnetic core loss (Pcv) at 100°C, 1 MHz, and 50 mT is 250 mW/cm³ or less.

6. The MnZn-based ferrite according to claim 1 or 2, wherein a magnetic permeability µ at 25°C is 450 or more.

7. A method for producing the MnZn-based ferrite according to claim 1 or 2, the method comprising:
a process of mixing raw materials comprising respective main components so that, after sintering, in 100 mol% of the main components, Fe₂O₃ is 56.0 to 59.0 mol%, ZnO is 2.5 to 7.0 mol%, and a balance is MnO;
a process of adding raw materials comprising respective sub-components so that, after sintering, the MnZn-based ferrite comprises 0.010 to 0.050 mass% of SiO₂, 0.020 to 0.060 mass% of CaO, and 0.150 to 0.350 mass% of Co₂O₃ with respect to 100 mass% of the main components; and
a process of disintegrating an obtained mixed powder until the mixed powder becomes a disintegrated powder having a D90 particle size of 1.2 µm or less.

8. The method according to claim 7, further comprising a process of molding the disintegrated powder and heat-treating a resulting molded body at 1150 to 1250°C.
